# EUROPEAN PATENT SPECIFICATION

(11) **EP 3 498 595 B1**
(45) Date of publication and mention of the grant of the patent: **02.12.2020**
(21) Application number: 17207454.4
(22) Date of filing: 14.12.2017
(51) Int. Cl.: B64C 9/14, B64C 9/16, B64C 9/20, B64C 3/14

(54) **AIRCRAFT WING COMPRISING CRUISE MINI FLAPS**
FLUGZEUGFLÜGEL UMFASSEND FLUGMINIKLAPPEN
AILE D'AÉRONEF COMPRENANT DES MINI-VOLETS DE CROISIÈRE

(43) Date of publication of application: 19.06.2019
(73) Proprietor: Lauk, Peep, 61713 Õssu village (EE)
(72) Inventor: Lauk, Peep, 61713 Õssu village (EE)
(74) Representative: Sarap, Margus

(56) References cited:
- WO-A1-2014/025252
- US-A- 4 995 575
- DO T ET AL: "Numerical study of turbulent trailing-edge flows with base cavity effects using URANS", JOURNAL OF FLUIDS AND STRUCTURES, ACADEMIC PRESS, AMSTERDAM, NL, vol. 26, no. 7-8, 1 October 2010 (2010-10-01), pages 1155-1173, XP027503591, ISSN: 0889-9746, DOI: 10.1016/J.JFLUIDSTRUCTS.2010.07.006 [retrieved on 2010-10-01]

## Description

### TECHNICAL FIELD

This invention relates to increasing the aircraft wing lift and to decreasing the aerodynamic drag during flight. The cruise miniflap (hereinafter CMF) according to the disclosure is part of the aircraft wing or the trailing edge flap and it can be used to modify the camber and the area of the aircraft wing and to create a cavity within the wing trailing edge.

### BACKGROUND ART

The high wing loading of modern long range commercial airplanes does not allow them to achieve the optimal cruise altitude after take-off without a sharp increase of the aerodynamic drag because the used wing profile has been designed for low aerodynamic drag, with the lift coefficient C_{L} within the range of 0.45-0.6. Lower cruise altitude, however, results in a slower ground speed, which in turn increases fuel consumption. In the areas of heavy air traffic, lower cruise altitude often prevents from selecting the direct route to the destination airport. Therefore, heavier aircraft have high fuel consumption in the first stage of the flight. The invention described herein provides means for increasing the wing lift coefficient to the level of 0.7-0.8 so that the drag coefficient does not grow substantially. It allows the commercial transport airliners to reach higher altitudes after take-off and to improve the aerodynamic value (lift to drag or L/D ratio), which substantially reduces fuel consumption and also lengthens the flight distance.

Various modified aircraft wing trailing edges have previously been patented. The most relevant of these are the following:
Document GB 2174341A, 5 November 1986, The Secretary of State for Defence (United Kingdom) (1), describes a supercritical wing section provided with a hinged flap attached to the wing.

Document US6565045 B1, 20 May 2003, Onera, describes an aerodynamic surface, such as a wing, comprising a reduced-pressure face and a pressure face which are connected at the rear section of the wing.

In document US 2007/0221789 A1, 27 September 2007, Hak-Tae Lee et al. describe an improved trailing edge aerodynamic control effector.

In document US 2013/0214092 A1, 22 August 2013, Airbus Operations GmbH, an aerodynamic wing section with ancillary flaps has been described which can be moved with a guide mechanism and a drive device for actuating the ancillary flaps.

Document GB 2174341A describes a device arranged to the trailing edge of a supercritical wing profile, which can be used to modify the camber as well as the thickness of the wing trailing edge. Compared to the above solutions, the device according to this invention ensures lower aerodynamic drag because a supercritical wing profile with a cavity in the trailing edge has lower aerodynamic drag than a blunt trailing edge, and in addition, the device provided in this invention alters the area of the wing, which also makes it possible to reduce the aerodynamic drag. Differently from the devices known in the prior art, such as the devices described in documents US 6565045 B1 and US 20070221789 A1, the device according to this invention, when in retracted position, provides a thinner trailing edge and consequently, also a substantially lower C_{L} value (0.4-0.6). The above-said implication can be illustrated by the graph from US 6565045 B1 which reveals that the aerodynamic surface developed by the applicants reduces drag when C_{L} > 0.7. With the device according to this invention, the value of C_{L} > 0.63 is achieved. The graph cited above also shows that the drag coefficient C_{d} is substantially higher than the value achieved with the device provided in this invention. Document US 2007/0221789 anticipates the simultaneous use of several effectors because the width of the element is relatively small. The device according to this invention has a simpler construction, it is more rigid and, all in all, more reliable. With C_{L} in the range of 0.4-0.75, the device provided in this invention also has lower aerodynamic drag at Mach 0.75-0.8. When compared with the device described in US 2013/0214092, the cruise miniflap according to this invention (CMF) has lower aerodynamic drag, it is more rigid and becomes less deformed under the air flow, therefore, it provides for a more reliable way to improve the performance of aircraft.

In document "Numerical study of turbulent trailing-edge flows with base cavity effects using URANS", JOURNAL OF FLUIDS AND STRUCTURES, ACADEMIC PRESS, AMSTERDAM, NL, vol. 26, no. 7-8, 1 October 2010 (2010-10-01), pages 1155-1173, a numerical study on flow past a blunt-edged two-dimensional NACA 0015 section and the same section with various base cavity shapes and sizes at high Reynolds numbers has been performed using the unsteady Reynolds-averaged Navier-Stokes (URANS) approach with the realisable K-E turbulence model. It is found that the intensity of the vortex strengths at the trailing-edge is amplified when the degree of bluntness is increased, leading to an increase in the mean square pressure fluctuations. The presence of the base cavity at the trailing-edge does not change the inherent Strouhal number of the 2D section examined. It is observed that the size of the cavity has more influence on the periodic trailing-edge flow than its shape does. In document WO 2014/025252 A1, STICHTING ENERGIE, 13 February 2014 is described an aerodynamic element for a wind turbine rotor blade where a part of the rotor blade having a flat-back trailing edge. The flat-back airfoil is a specific type of aerodynamic element and has an upper surface and a lower surface, which are differently shaped in order to provide lift. The trailing edge of the airfoil is a substantially flat surface. The aerodynamic element further comprises a non-symmetrical swallow tail shaped cavity body attached to the trailing edge of the aerodynamic element of the rotor blade for a wind turbine.

In document US4,995,57 A, Stephenson Martin F, 26.02.1991 is described the trailing edge flap system of the wing comprising an inboard dual flap system, an outboard dual flap system, and an outboard aileron. Each dual flap system has a chordwise or streamwise, pair of geometri-cally similar flap support assemblies. Each flap support assembly is enclosed within a streamlined fairing, except for the wing root flap support assembly which is housed within the fuse-lage. The outboard dual flap system comprises a fore-flap and an aft-flap disposable within an upper trailing edge panel and a lower trailing edge panel of the wing. The dual flap system features two chordwise or longitudinally aligned flap support assemblies which are mounted beneath the lower surface of the wing and enclosed by fairings.

### SUMMARY OF INVENTION

The invention is directed to a wing according to claim 1. The cruise mini flap (CMF) according to the disclosure an ancillary aerodynamic surface which can be provided at the trailing edge, in the trailing edge flap or the ailerons. If necessary, the cruise miniflap can be moved mechanically by means of actuators and this way it is possible to modify the camber, area and shape of the trailing edge. The transition between the wing and the CMF is relatively smooth and there are no sharp transitions characteristics to conventional trailing edge flaps. One wing can be provided with one or more cruise miniflap sections. With the use of more than one cruise miniflap it is possible to optimise the distribution of lift along the span of the wing and additionally reduce induced drag. The trailing edge with a cavity permits to reduce drag (C_{L} > 0.6) at Mach > 0.65. The optimal height of the trailing edge depends on the used wing profile, the lift coefficient and the object's air speed. For example, when the Mach number of the supercritical wing profile at the cruise speed is 0.78 and the lift coefficient C_{L} is 0.7, the optimal height of the trailing edge with a cavity is 0.7% of the chord length. In the case of the higher lift coefficient value, the optimal height of the trailing edge with a cavity is also higher. If the value of C_{L} is less than 0.6, the trailing edge with a cavity does not reduce drag and it is in the retracted position. The trailing edge with a cavity may be fixed or with a modifiable height and shape. The profile of the cavity may be arched or angular. To modify the height, the upper or lower edge of the CMF may be used.

The use of the CMF makes it possible to reduce the cost of maintenance and repair of the engines because the power required during the flight is reduced and therefore the engines do not wear so much. In addition to lower fuel consumption, the invention helps to reduce emission of pollutants and noise.

### BRIEF DESCRIPTION OF DRAWINGS

In order to give a better and more detailed overview of the invention, the following embodiments with reference to the drawings will be described, of which:

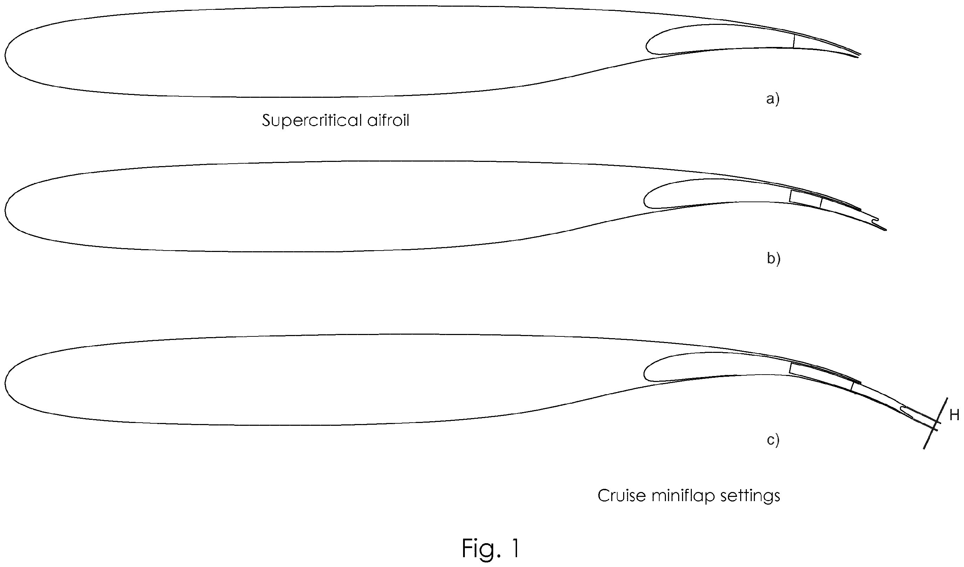

Figure 1 depicts the position of the CMF according to the invention within the wing (trailing edge flap) (a) and its basic position, from which the one used in the initial position of take-off and cruise is depicted at the bottom of the figure (c), the position employed during the flight when the amount of fuel and the in-flight weight are decreasing is in the middle (b), and the position used in the final stage is at the top of the figure (a);

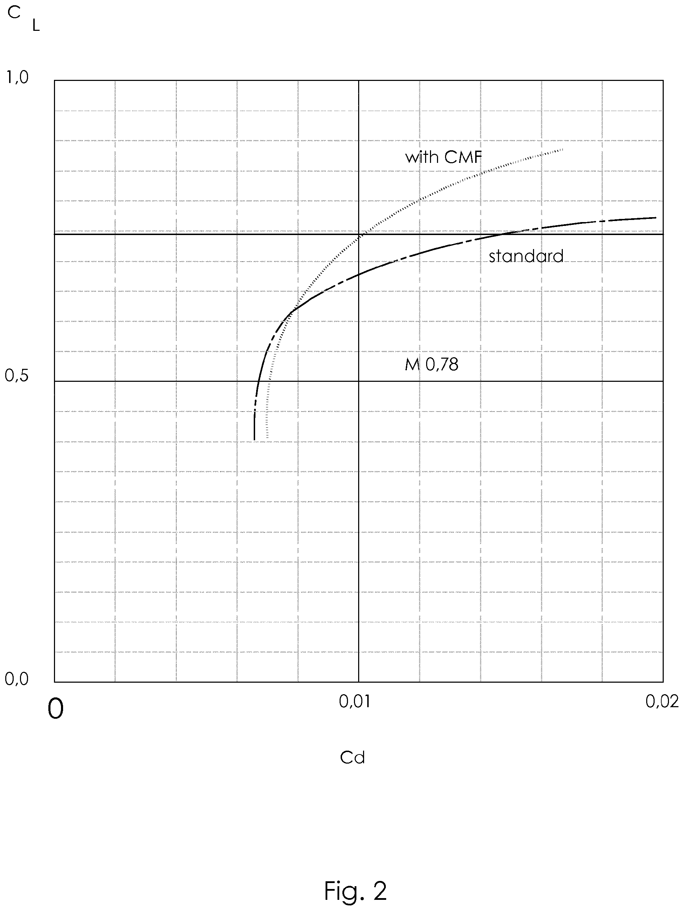

Figure 2 depicts the lift coefficient and drag coefficient ratio of the wing profile for a commercial transport aircraft at the speed corresponding to Mach 0.78. As seen in the figure, aerodynamic drag starts to grow rapidly at the C_{L} value of 0.63. With the use of the cruise miniflap of the invention, however, it is possible to reduce the aerodynamic drag substantially at the level of C_{L} > 0.62. When the in-flight weight decreases (because the fuel is being consumed), it is beneficial to retract the CMF gradually during the flight because the aerodynamic drag is smaller if the value of C_{L} is within the range 0.4-0.6;

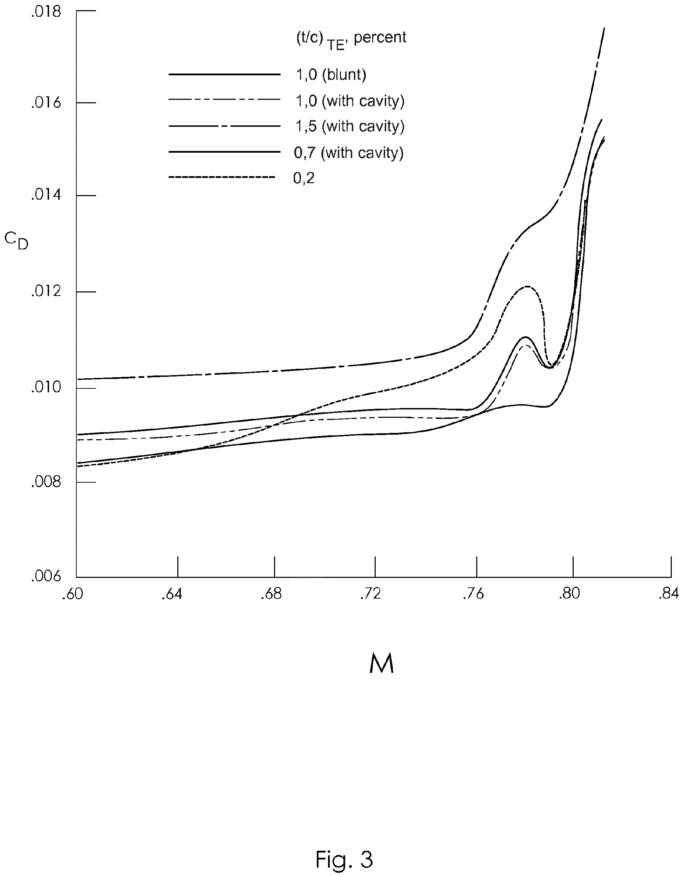

Figure 3 depicts the effect of various shapes of the wing trailing edge on the drag coefficient at the C_{L} value of 0.7 at different cruise speeds and the graph in the figure shows that the lowest drag at M 0.78 is achieved when the height of the cavity in the trailing edge is 0.7%;

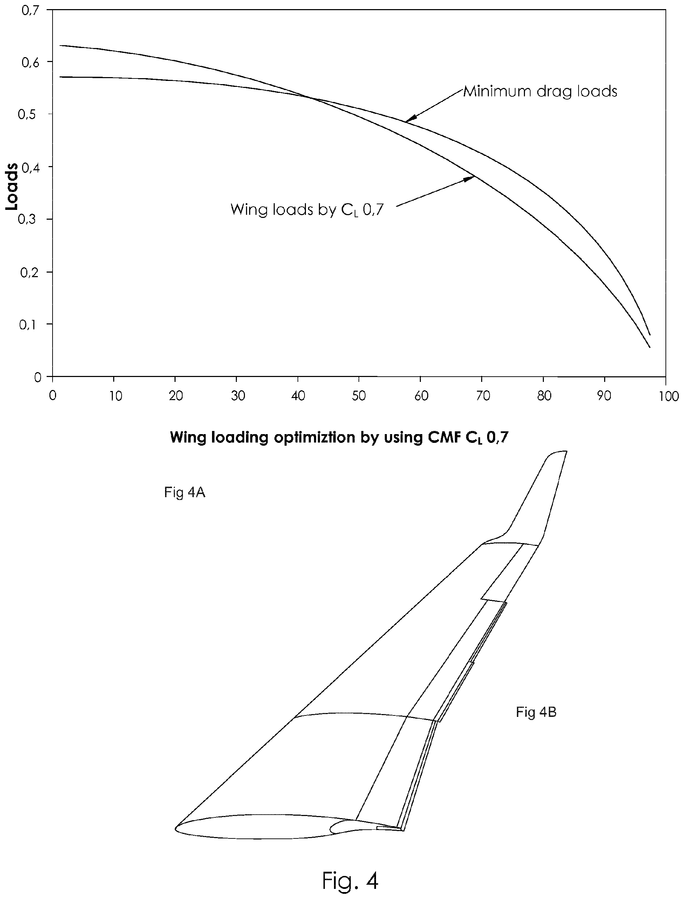

Figure 4A depicts a wing with various CMF sections in different positions. It gives the possibility to control the distribution of the lift over the span of the wing as necessary. The greatest increase in lift is achieved when the cruise miniflaps (CMFs) are used with the increasing of the deflection angle of ailerons and with the winglets at the wing tip;
Figure 4B is a graph showing the distribution of the lift (load) over the length of the wing. Distribution of lift over the wing length usually differs from the ideal (elliptic) due to engineering reasons. By using different positions of the cruise miniflap (CMF) sections, distribution of lift can be approximated to the elliptical, which in turn reduces the induced drag. The cruise miniflap (CMF) may partially also be located within the ailerons.

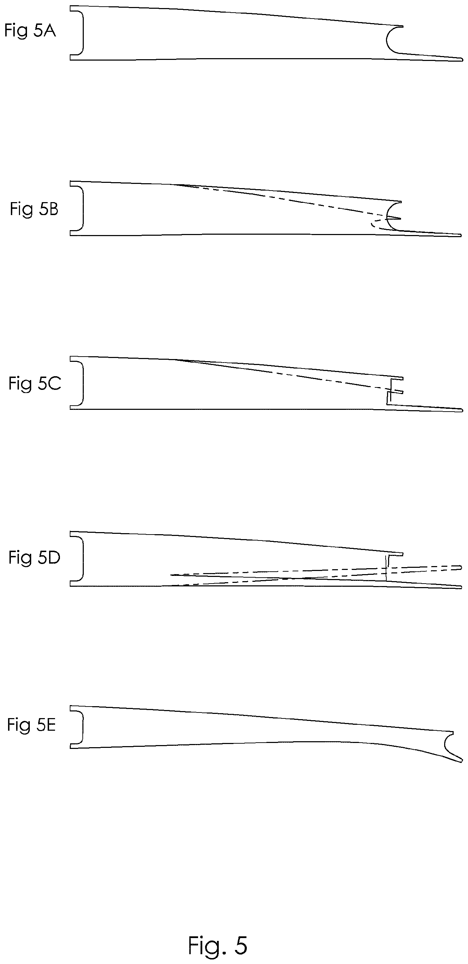

Figure 5 depicts possible variants of the cruise miniflap (CMF); Fig. 5A shows a fixed-height miniflap (CMF) profile, the shape of which, when retracted, is modified by the upper and lower edge of the trailing edge flap; the miniflap in Fig. 5B has an upper panel with a changeable angle and height, whereas the cavity is almost non-existent when the miniflap is retracted; Fig. 5C shows a cruise miniflap with a rectangular cavity and an upper controllable panel; Fig. 5D shows a cruise miniflap with a rectangular cavity and a lower controllable panel; Fig. 5E shows a cruise miniflap with a lower edge which is curved downward and a trailing edge cavity of a fixed height, whereas the shape of the profile, when retracted, is modified by the upper and lower edge of the trailing flap;

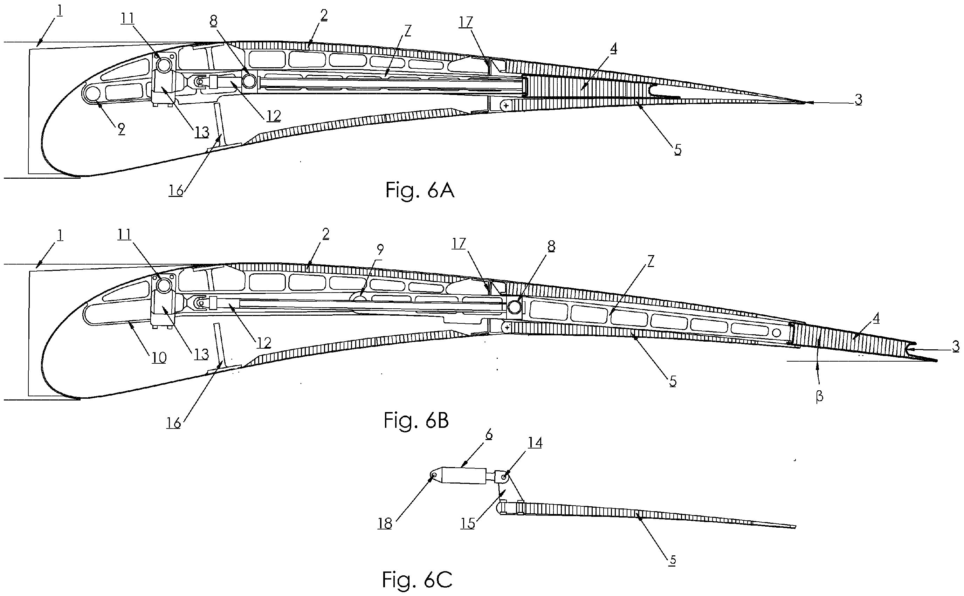

Figure 6 depicts a cross-sectional view of the rear part of the trailing edge flap; Fig. 6A shows the cruise miniflap in its completely retracted position and Fig. 6B the cruise miniflap in the completely extended position. Fig. 6C shows the actuating mechanism for moving the deflectable under panel;

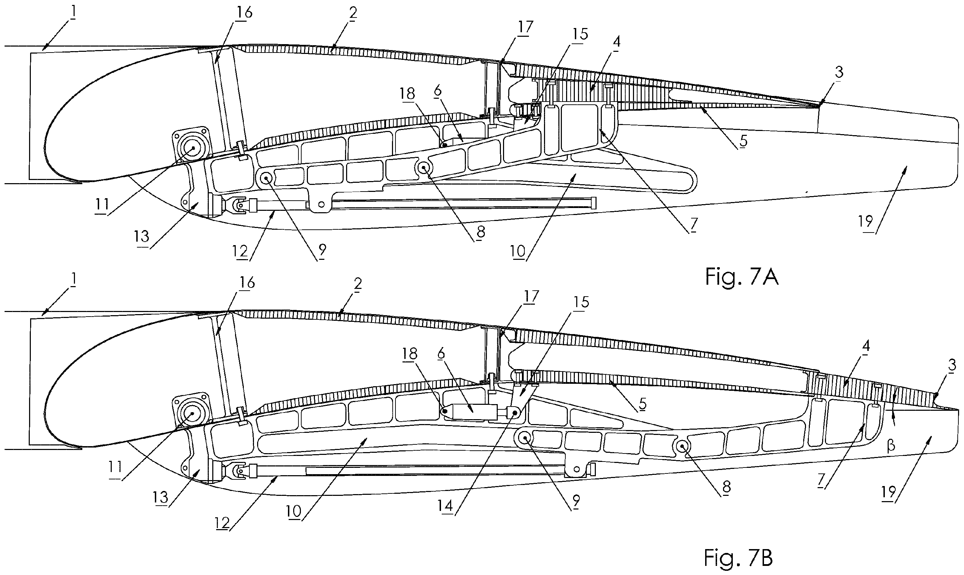

Figures 7A and 7B depict a mechanism for moving the cruise miniflap which is located partially outside the trailing edge flap within the wing fairing.

### DESCRIPTION OF EMBODIMENTS

Fig. 6 is a cross-sectional view of the aircraft wing comprising trailing edge flap in which the cruise miniflap is used. Fig. 6A depicts a cruise miniflap (CMF) in its completely retracted position. Fig. 6B depicts a cruise miniflap in its completely extended position. Fig. 6C depicts the mechanism for moving the deflectable under panel 5 where the horn 15 of the deflectable under panel is coupled, through the rear pivotal articulation 14, with the actuator 6, which through the forward pivotal articulation 18 is connected to the main construction of the trailing edge flap.

The cruise miniflap 4 is located in the rear part of the wing 1 or the trailing edge flap 2. In Fig. 6A, the cruise miniflap 4 is in the retracted position. The miniflap is attached to the rear end of the control unit 7, also the rear roller 8 and the first roller 9 are attached to the control unit 7, which move along the flap track 10 fastened to the main construction of the trailing flap. The load occurring due to the pressure difference is distributed from the trailing flap surface between the first spar 16 and the rear spar 17. To the main construction of the trailing edge flap or the flap track 10, an electrical motor 11 is fixed that rotates, through the reduction gear 13, the screw mechanism 12 with its end fixed to the rear roller 8 in a way that the nut attached to the roller 8 moves in a linear manner along the screw of the screw mechanism 12 and together with this, the control unit 7 with the cruise miniflap moves until it is in the entirely extended position, as shown in Fig. 6B. At the same time, the rear roller 8 and the first roller 9 are moving along the flap track 10. The function of the rollers is to stabilise the movement of the control unit along the flap track. The flap track 10 is fixed to the first spar 16 and the rear spar 17 of the wing (trailing edge flap). When the cruise miniflap moves to the extended position, it also slopes downward by the extension angle β (see Fig. 6B, the angle β is between the horizontal plane and the lower plane of the cruise miniflap). With the movement of the cruise miniflap, the under panel 5 of the wing (trailing edge flap) is sloped by means of the actuator 6. Through the forward pivotal articulation 18, the actuator 6 is fixed to the main construction of the wing (trailing edge flap) and by means of the rear pivotal articulation 14, it is fixed to the actuating horn 15 which moves the under panel 5. When the cruise miniflap (CMF) is being retracted, all parts move along the same trajectory, but in the opposite direction until the miniflap is in the retracted position.

In an alternative embodiment, especially in the case of the trailing edge flaps of a large aircraft, the mechanism for moving cruise miniflaps (drive (electrical motor) 11, reduction gear 13, screw mechanism 12 with the screw pair comprising of a threaded rod and a threaded nut moving along it) with the control unit 7, flap track 10, first and rear roller and the mechanism for moving the under panel of the trailing edge flap may be located within the wing fairing 19 (see Fig. 7B). In this case, the screw of the screw mechanism may be fixed to the horn, provided for this purpose in the control unit, which is not coupled with the rear roller.

The cruise miniflap can be extended outwards up to 7% of the wing chord (see Fig. 1C). By that, a cavity is formed in the trailing edge with the greatest possible height H (see Fig. 1C) of 1% of the chord. This position of the cruise miniflap is used at the maximum take-off weight of the aircraft in the initial stage of the flight. The arrangements shown in Fig. 1B are used at the cruise stage when the weight of the aircraft has decreased as the fuel has been consumed. In this case, the cruise miniflap has extended outwards from the wing by 2-6% of the chord and the height of the cavity is usually 0.5-0.7% of the chord. In the final stage of the flight, the cruise miniflap may be in the retracted position with the lowest aerodynamic drag, which is shown in Fig. 1A. At that, the cruise miniflap is entirely within the wing configuration and the height of the trailing edge is 0.1-0.3% of the wing chord. When the fixed-height cruise miniflap shown in Fig. 5A is used, its height in the arrangements depicted in Figs. 1C and 1B does not change and is usually 0.4-0.7% of the wing chord. In the retracted state, the cavity is virtually non-existent because the miniflaps are deep within the wing and the height of the trailing edge is in the range of 0.1-0.3% of the wing chord.

During the cruise, the cruise miniflap extends outwards from the wing by 2-6% of the wing chord and the height of the cavity in the rear end of the cruise miniflap is within the range of 0.4-0.7% of the wing chord, but in the final stage of the flight it is entirely within the trailing edge flap configuration and the height of the edge is in the range of 0.1-0.3% of the wing chord. The profile of the cavity in the miniflap rear edge is curved inwards, whereas the edge of the lower side of the miniflap extends by 0.4-1.0% of the wing chord over the edge of the upper side. Alternatively, the profile of the cavity in the rear edge of the cruise miniflap may be rectangular and the edge of the lower side of the miniflap extends by 0.5-2.0% of the wing chord over the edge of the upper side. In various embodiments, the upper surface of the cruise miniflap may be movable downwards or its lower surface may be movable upwards.

In alternative embodiments, the cruise miniflap may have rear sections with different profiles. In Fig. 5A, the profile of a fixed-height cruise miniflap (CMF) is shown, the shape of which in the retracted state is modified by the upper side of the trailing edge; Fig. 5B shows a cruise miniflap with an upper panel of a changeable angle and height, which has practically no cavity in the trailing edge when in retracted position; Fig. 5C shows a variant of the cruise miniflap with a rectangular cavity and an upper controllable upper panel; Fig. 5D shows another variant of the cruise miniflap with a rectangular cavity and a controllable under panel; Fig. 5E shows a variant of the cruise miniflap of a shorter profile (the lower section projecting outward is shorter) where the lower surface of the miniflap has a downward curving surface and the lower rear edge of the miniflap is shorter than that of the cruise miniflaps provided in Figs. 5A-5D.

### REFERENCE SIGNS LIST

1 - Wing
2 - Trailing edge flap
3 - Trailing edge
4 - Cruise miniflap
5 - Under panel
6 - Actuator for the under panel
7 - Control unit
8 - Rear roller
9 - First roller
10 - Flap track
11 - Electrical motor
12 - Screw mechanism of the actuator
13 - Reduction gear
14 - Rear pivotal articulation
15 - Actuating horn
16 - First spar
17 - Rear spar
18 - Forward pivotal articulation
19 - Fairing

## Claims

1. A wing (1) comprising a trailing edge flap (2) for improving the aerodynamic properties of an aircraft, wherein the trailing edge flap (2) comprises a cruise mini flap (4), a trailing edge (3), a first spar (16) and a rear spar (17), wherein the wing (1) comprises a control unit (7), a flap track (10) attached to the trailing edge flap (2), a screw mechanism (12) and a drive (11) for moving the cruise mini flap (4) (4) out of and in the trailing edge flap (2), wherein the cruise mini flap (4) is located between the upper panel of the trailing edge (3) and the deflectable under panel (5) of the trailing edge (3) and fixed to the control unit (7), wherein the control unit (7) is configured to be moved by means of a rear roller (8) and a first roller (9) along the flap track (10), wherein the control unit (7) is coupled to the screw mechanism (12) through the rear roller (8), wherein the screw mechanism (12) is coupled with the drive by means of a reduction gear (13), and **characterised in that** the cruise mini flap (4) has a cavity in its rear edge, the height of which is up to 1% of the wing chord.

2. The wing (1) according to claim 1, wherein during the cruise, the cruise mini flap (4) is adapted to extend outwards from the wing (1) by 2-6% of the wing chord and the height of the cavity in the rear edge of the cruise mini flap (4) adapted to be in the range of 0.4-0.7% of the wing chord, and wherein in the final stage of the flight, the cruise mini flap (4) is adapted to be entirely within the trailing edge flap (2) and the height of the trailing edge (3) adapted to be the range of 0.1-0.3% of the wing chord.

3. The wing (1) according to claim 1, wherein the profile of the cavity in the rear edge of the cruise mini flap (4) is curved inward and the edge of the lower side of the cruise mini flap (4) extends over the upper edge by 0.4-1.0% of the wing chord.

4. The wing (1) according to claim 1, wherein the profile of the inward cavity in the rear edge of the cruise mini flap (4) is rectangular and the edge of the lower side of the cruise mini flap (4) extends over the upper edge by 0.4-1.0% of the wing chord.

5. The wing (1) according to any of claims 1 to 4, wherein the upper surface of the cruise mini flap (4) can be moved downwards.

6. The wing (1) according to any of claims 1 to 4, wherein the lower surface of the cruise mini flap (4) can be moved upwards.

7. The wing (1) according to any of claims 1 to 6, wherein the wing (1) comprises a mechanism intended for moving the cruise mini flap (4), wherein the mechanism comprises the control unit to which the cruise mini flap (4) is fixed, the first roller (9) and the rear roller (8) movable along the flap track (10) that is attached to the main frame of the trailing edge flap (2), an actuating horn (15) of the control unit to which the actuator screw mechanism (12) is fixed and one end of which is, by means of articulations, connected with the reducing gear (13), and the drive (11) for moving the cruise mini flap (4), which is connected with the reducing gear (13) and fixed to the main construction of the trailing edge flap (2), the mechanism being mounted within a trailing edge flap fairing (19) of the wing (1) located outside the trailing edge flap (2).

## Patentansprüche

1. Eine Tragfläche (1), bestehend aus einer nachziehenden Ecklandeklappe (2) zur Verbesserung der aerodynamischen Eigenschaften eines Flugzeugs, wobei die nachziehende Ecklandelappe (2) eine Flugminiklappe (4), eine nachziehende Kante (3), einen vorderen Holm (16) und einen hinteren Holm (17) umfasst, wobei die Tragfläche (1) ein Steuergerät (7), eine an die nachziehende Ecklandeklappe (2) angebrachte Klappenschiene (10), einen Schraubmechanismus (12) und einen Antrieb (11) zur Bewegung der Flugminiklappe (4) aus und in die nachziehende Ecklandeklappe (2) umfasst, wobei sich die Reiseminiklappe (4) zwischen der oberen Platte der nachziehenden Kante (3) und der ableitenden unteren Platte (5) der nachziehenden Kante (3) befindet und am Steuergerät (7) befestigt ist, wobei das Steuergerät (7) so konfiguriert ist, dass es durch eine hintere Rolle (8) und eine vordere Rolle (9) entlang der Klappenschiene (10) bewegt werden kann, wobei das Steuergerät (7) an den Schraubmechanismus (12) über die hintere Rolle (8) gekoppelt ist, wobei der Schraubmechanismus (12) mit dem Antrieb durch ein Reduzierungsgetriebe (13) gekoppelt ist und **dadurch gekennzeichnet ist, dass** die Flugminiklappe (4) einen Hohlraum in der nachziehenden Kante aufweist, wobei die Höhe dieses Hohlraums bis zu 1 % der Tragflächen-Profilsehne ausmacht.

2. Eine Tragfläche (1) gemäß Anspruch 1, wobei während des Fluges die Flugminiklappe (4) so angepasst werden kann, dass sie sich nach außen von der Tragfläche (1) um 2 - 6 % der Tragflächen-Profilsehne wegbewegt und die Höhe des Hohlraums in der nachziehenden Kante der Flugminiklappe (4) im Bereich von 0,4 - 0,7 % der Profilsehne angepasst wird, und wobei sich im letzten Abschnitt des Fluges die Flugminiklappe (4) vollständig innerhalb der nachziehenden Ecklandeklappe (2) befindet und die Höhe der nachziehenden Kante (3) im Bereich von 0,1 - 0,3 % der Tragflächen-Profilsehne angepasst wird.

3. Eine Tragfläche (1) gemäß Anspruch 1, wobei das Profil des Hohlraums in der nachziehenden Kante der Flugminiklappe (4) nach innen gebogen ist und sich die Kante der unteren Seite der Flugminiklappe (4) über die obere Kante um 0,4 - 1,0 % der Tragflächen-Profilsehne erstreckt.

4. Eine Tragfläche (1) gemäß Anspruch 1, wobei das Profil des Innenhohlraums in der nachziehenden Kante der Flugminiklappe (4) rechteckig ist und sich die Kante der unteren Seite der Flugminiklappe (4) über die obere Kante um 0,4 - 1,0 % der Tragflächen-Profilsehne erstreckt.

5. Eine Tragfläche (1) gemäß einem der Ansprüche 1 bis 4, wobei die obere Oberfläche der Flugminiklappe (4) nach unten bewegt werden kann.

6. Eine Tragfläche (1) gemäß einem der Ansprüche 1 bis 4, wobei die untere Oberfläche der Flugminiklappe (4) nach oben bewegt werden kann.

7. Eine Tragfläche (1) gemäß einem der Ansprüche 1 bis 6, wobei der Flügel (1) einen Mechanismus enthält, der für die Bewegung der Flugminiklappe (4) vorgesehen ist, wobei der Mechanismus das Steuergerät enthält, an das die Flugminiklappe (4) angebracht ist, die vordere Rolle (9) und die hintere Rolle (8) entlang der Klappenführung (10), die am Hauptrahmen der nachziehenden Eckklappe (2) angebracht ist, beweglich sind, eine Betätigungshupe (15) des Steuergeräts (7), an das der Stellantriebsschraubenmechanismus (12) angebracht ist und ein Ende davon über Gelenke mit einem Reduzierungsgetriebe (13) verbunden ist, sowie der Antrieb (11) zur Bewegung der Flugminiklappe (4), die mit dem Reduzierungsgetriebe (13) verbunden und an die Hauptkonstruktion der nachziehenden Eckklappe (2) angebracht ist, wobei der Mechanismus an der nachziehenden Eckklappenverkleidung (19) des Flügels (1) befestigt ist, der sich außerhalb der nachziehenden Eckklappe (2) befindet, enthält.

## Revendications

1. Aile (1) comprenant un volet de bord de fuite (2) pour améliorer les propriétés aérodynamiques d'un avion, dans laquelle le volet de bord de fuite (2) comprend un mini-volet de croisière (4), un bord de fuite (3), un premier longeron (16) et un longeron arrière (17), dans laquelle l'aile (1) comprend une unité de commande (7), une piste de volets (10) fixée au volet de bord de fuite (2), un mécanisme à vis (12) et un entraînement (11) pour déplacer le mini-volet de croisière (4) hors et dans le volet de bord de fuite (2), dans lequel le mini volet de croisière (4) est situé entre le panneau supérieur du bord de fuite (3) et le panneau inférieur déformable (5) du bord de fuite (3) et fixé à l'unité de commande (7), dans lequel l'unité de commande (7) est configurée pour être déplacée au moyen d'un rouleau arrière (8) et d'un premier rouleau (9) le long de la piste de volet (10), dans lequel l'unité de commande (7) est couplée au mécanisme à vis (12) par l'intermédiaire du galet arrière (8), dans lequel le mécanisme à vis (12) est couplé à l'entraînement au moyen d'un réducteur (13), et **caractérisé en ce que** le mini volet de croisière (4) présente une cavité dans son bord arrière, dont la hauteur est jusqu'à 1% de la corde de l'aile

2. Aile (1) selon la revendication 1, dans laquelle, pendant la croisière, le mini volet de croisière (4) est adapté pour s'étendre vers l'extérieur de l'aile (1) de 2 à 6 % de la corde de l'aile et la hauteur de la cavité dans le bord arrière du mini volet de croisière (4) est adapté pour être dans la plage de 0. 4-0,7 % de la corde de l'aile, et dans lequel, dans la phase finale du vol, le mini-volet de croisière (4) est entièrement à l'intérieur du volet de bord de fuite (2) et la hauteur du bord de fuite (3) est adaptée pour être dans la plage de 0,1-0,3 % de la corde de l'aile

3. Aile (1) selon la revendication 1, dans laquelle le profil de la cavité dans le bord arrière du mini volet de croisière (4) est incurvé vers l'intérieur et le bord du côté inférieur du mini volet de croisière (4) s'étend sur le bord supérieur de 0,4 à 1,0 % de la corde de l'aile.

4. Aile (1) selon la revendication 1, dans laquelle le profil de la cavité intérieure dans le bord arrière du mini volet de croisière (4) est rectangulaire et le bord du côté inférieur du mini volet de croisière (4) s'étend sur le bord supérieur de 0,4 à 1,0 % de la corde de l'aile.

5. Aile (1) selon l'une des revendications 1 à 4, dans laquelle l'extrados du mini-volet de croisière (4) peut être déplacé vers le bas.

6. Aile (1) selon l'une des revendications 1 à 4, dans laquelle la surface inférieure du mini volet de croisière (4) peut être déplacée vers le haut.

7. Aile (1) selon l'une des revendications 1 à 6, dans laquelle l'aile (1) comprend un mécanisme destiné à déplacer le mini-volet de croisière (4), dans laquelle le mécanisme comprend l'unité de commande à laquelle le mini-volet de croisière (4) est fixé, le premier rouleau (9) et le rouleau arrière (8) mobiles le long de la piste de volet (10) qui est fixée au cadre principal du volet de bord de fuite (2), un klaxon de commande (15) de l'unité de commande (7) auquel est fixé le mécanisme à vis de commande (12) et dont une extrémité est, au moyen d'articulations, reliée à un réducteur (13), et l'entraînement (11) pour le déplacement du mini-volet de croisière (4), qui est relié au réducteur (13) et fixé à la construction principale du volet de bord de fuite (2), le mécanisme étant monté à l'intérieur d'un carénage de volet de bord de fuite (19) de l'aile (1) situé à l'extérieur du volet de bord de fuite (2).
